# EUROPEAN PATENT APPLICATION

(11) **EP 1 000 700 A1**
(43) Date of publication of application: **17.05.2000**
(21) Application number: 99203448.8
(22) Date of filing: 20.10.1999
(51) Int. Cl.: B23Q 7/10, B65G 47/14

(54) **Installation and method for separating out individual articles**

(30) Priority: 20.10.1998 NL 1010362
(71) Applicant: Polymac B.V., 6710 BC Ede (NL)
(72) Inventor: Van Den Brink, Wim, 6732 BA Harskamp (NL); Lugard, Sijbrand Jean Casper, 6741 KM Lunteren (NL)
(74) Representative: de Bruijn, Leendert C.

(57) **Abstract**

Method and installation for separating out individual articles (10,15,16). The articles (10,15,16) can be bucket handles (10) tipped into a container (2). The articles (10,15,16) are moved successively upwards with the aid of a series of sliding plates (5-9) which are tilted somewhat with respect to the vertical and reciprocate in the vertical direction. With this arrangement the width of the support surface of the successive sliding plates (5-9) decreases as the plates (5-9) reciprocate higher, so that ultimately a width is produced which is just sufficient to contain the width of a bucket handle (10). To prevent bucket handles (10) from lying on top of one another, bucket handles (10) extending more than a certain distance above the support surface are removed with the aid of an ejector (11).

## Description

The present invention relates to an installation and method for separating out individual articles according to claim 1 and a method for separating out individual articles according to claim 7.

Such an installation is used for sorting and positioning elongated articles of a wide variety of types. These articles are tipped into a container. The first of a series of sliding plates or support elements moves below the base surface of the container and the support surface thereof has a width which is distinctly greater than the width of the article to be sorted. Because the sliding plates slope somewhat with respect to the vertical, the elongated articles are automatically placed in the correct position against the adjacent second support element or sliding plate, which is located at a high level. The lowest start point of the reciprocal movement of the second sliding plate is at or somewhat below the highest point of the reciprocal movement of the first sliding plate. Moreover, the movement between the two sliding plates is synchronised such that the second sliding plate is close to its lowest point when the first sliding plate is at its highest point, so that at that point in time, as a result of the plates being positioned one behind the other and oriented at somewhat of a slope, the articles concerned are transferred from the support surface of the first sliding plate to the support surface of the second sliding plate. Because the support surface of the second sliding plate is somewhat narrower, if a number of articles are present on the first sliding plate fewer articles will be present on the support surface of the second sliding plate. This is repeated for the third, fourth, etc. sliding plates until ultimately only one article is present on the last sliding plate and this correctly positioned article is then placed on a discharge conveyor or other discharge means.

An installation of this type functions satisfactorily for tubes and other articles. If, however, flat articles have to be sorted using an installation of this type, there is a risk that two or more flat articles lying on top of one another will be present on a support surface. Despite the fact that the support surfaces become narrower as the number of the sliding plates increases, it cannot be guaranteed that separation of the articles will take place. Consequently it is possible that long flat articles are not separated out completely individually and that two articles lying on top of one another land on one position on the discharge conveyor.

Such long flat articles are, for example, bucket handles. These can be produced by injection moulding. With one method, a series of handles are held together by the sprue and transported in a process as far as the robot for fixing the bucket handles on the buckets.

With other structures the bucket handles are separated from one another at an earlier stage and it is not uncommon for these to be randomly tipped into a container. For a robot for automated fixing of the bucket handles, it is important that all handles are fed in the same position to such a robot.

An installation of this type for separating out individual articles according to the preamble of claim 1 is described in CH 663404A5.

German Offenlegungsschrift 4402468 describes an installation for sorting yarn package formers for spinning machines. To prevent more than two such formers being displaced in the vertical direction, the formers are arranged on a support element that is provided with a support against which the formers bear. Above the position where the formers are located, the support element is provided with an elongated slit through which a resilient tongue extends. If two formers are located above one another, the upper former will be pushed away under the effect of the resilient tongue. As a result of the slit, the resilient tongue will be pushed back again.

Such an installation is suitable for use for relatively large articles, but articles of relatively small depth, such as bucket handles, cannot be removed by means of this installation. After all, it is necessary for the spring tongue to have a certain slope in order to make pushing away with the aid of the support element possible. Moreover, a certain vertical displacement of the support element is necessary in order to move the spring tongue back. If such a displacement corresponds to the thickness of the article that is on the support element there is a risk that not only the undesired article, such as a bucket handle, but also the desired article is removed.

The invention aims to avoid these drawbacks.

This aim is realised in a device as described above having the characterising features of claim 7.

By using the ejector means it is ensured that the height of the articles on the support surface concerned does not exceed a specific value. That is to say, the height will be so chosen that it is somewhat greater than the thickness of a bucket handle or other flat article but less than the total height of two articles stacked on top of one another. As a result the second and subsequent articles will automatically be moved off the support surface. As a result of the sloping position of the support surface, the bottom article will not be carried along by the ejector during the ejection operation. It is possible to make a separate elevation on the support plate concerned in order to prevent such co-movement as far as possible.

According to the invention, the ejector means interact with the support surface of the last support element, that is to say the support element that is closest to the discharge conveyor. The ejector means can be pins, brushes and the like.

The ejector means are preferably located somewhat below the discharge position so that after ejecting double or further articles and withdrawing the ejector means movement of the last support element can be continued in order to bring the article concerned onto the discharge conveyor.

According to a preferred embodiment of the invention, the ejector means are actively operated, that is to say electrical, mechanical or hydraulic displacement of the ejector means in the path of the articles takes place. By this means highly accurate control can be obtained, as a result of which it is always ensured that only the undesired articles, such as bucket handles, are removed. After all, the ejector means no longer have to be so designed that they are forced back on further displacement of the support element. This is achieved in a separate, controlled manner. According to a further advantageous embodiment of the invention, means are present for further aligning the articles after they have reached the discharge position. That is to say, the articles are not placed on the discharge conveyor immediately after reaching the discharge position.

Some flat articles are not absolutely straight. Consequently, on positioning the articles on the support surface with respect to the ejector means described above a position is produced that is not always the same, as a result of which it is possible that even when a single article is present this is caught by the ejector means because of the curved nature thereof. This can be prevented by providing the support surface with elevations made close to the ejector means. By this means the article concerned will bear on said elevations and it is ensured that optimum "thickness determination" is always possible at the location of the ejector means.

The invention also relates to an installation for separating out individual articles, comprising at least one support member for said articles, which support member is movable between a feed position and a relatively higher discharge position, as well as ejector means arranged below said discharge position and movable in a path of the support surface of said support member in a direction for removing one or more of said articles from said support surface of said support member, wherein the ejector means comprise operating means which are controlled by a control such that the ejector means move in the path of the articles if said support member is a predetermined distance away from said ejector means.

The invention will be elucidated referring to an embodiment as example shown in the drawing, wherein
Fig. 1 shows, diagrammatically in cross-section, the installation according to the invention in combination with a feed and discharge;
Figs 2 and 3 show various positions of the installation according to the invention; and
Fig. 4 shows a sectional side view of the support surface of the last sliding plate in combination with the ejector.

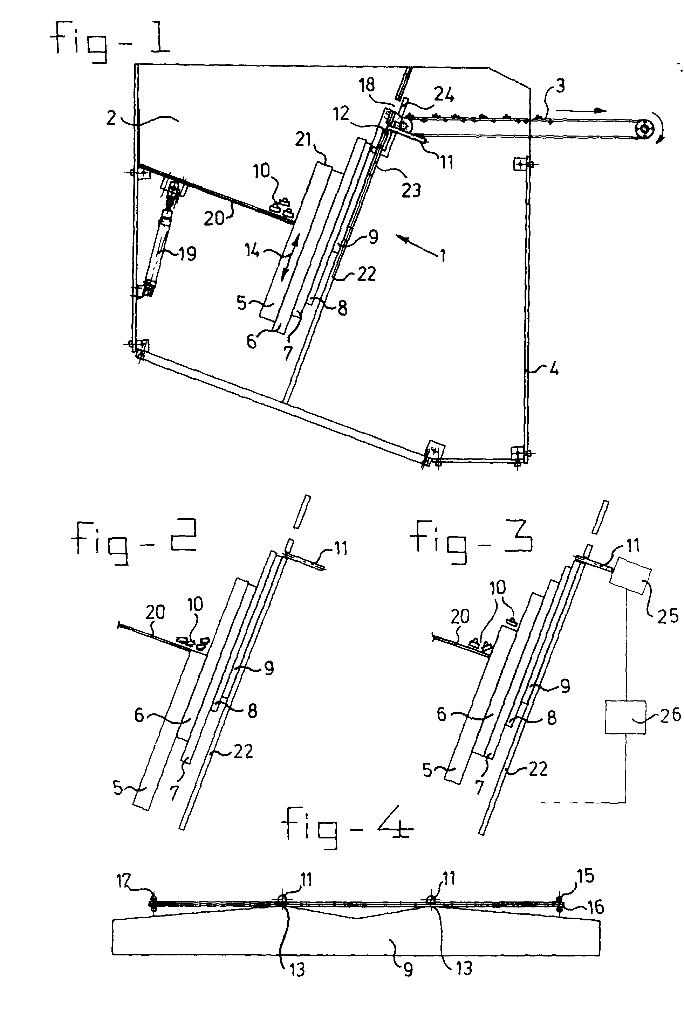

In Fig. 1 the installation according to the invention is indicated in its entirety by 1. The installation is accommodated in a housing 4, in which a container tray 2, as feeder, and (part of) a discharge conveyor 3 are also arranged.

Installation 1 consists of a number of sliding plates 5 - 9 which slope somewhat with respect to the vertical and are capable of executing a reciprocating movement as indicated by arrow 14.

Reciprocating movement of the sliding plates 5 - 9 is in various directions and can be controlled, for example, by a curved disc, crank/drive rod mechanism or in some other mechanical, hydraulic or electrical manner. The sliding plates can be layered with respect to one another in any manner known from the prior art.

With this arrangement the construction is such that sliding plate 5 is at the lowest point below the level of the base of container 2. The slope of said base 20 is adjustable with the aid of jack 19. A large number of bucket handles 10 are present in said container 2. If sliding plate 5 is located below the base level, a number of bucket handles will move under gravity onto the support surface 21 of sliding plate 5. Sliding plate 6 forms the end limit for this movement. Sliding plate 5 is then moved upwards while moving sliding plate 6 downwards until the position shown in Fig. 1 has been reached. The bucket handles present on support surface 21 will move under gravity to the support surface of sliding plate 6, which support surface is not shown in more detail.

As can be seen from Figs 2 and 3, this movement is repeated such that the bucket handles are then moved to sliding plate 7, 8 and 9.

The width of a bucket handle is, for example, approximately 12 mm. The width of sliding plate 5 is approximately 40 mm, so that a considerable number of such bucket handles can be placed on sliding plate 5. The width of the support surface of sliding plate 6 is smaller so that not all handles are transferred from support surface 21 to the support surface of sliding plate 6. The same applies with regard to sliding plates 7 - 9. The support surfaces thereof become increasingly narrower and the support surface of sliding plate 9 is, for example, 12 mm wide, so that, in principle, only a single bucket handle can then be present thereon.

In practice, however, it has been found that although this is the case in the width direction it is not so in the height direction. In the case of long flat articles it has been observed that these can come to lie on top of one another and this is not eliminated with the aid of the installation consisting solely of sliding plates, so that two articles, such as bucket handles, lying on top of one another could pass via opening 18 onto discharge conveyor 3. This is particularly undesirable because discharge conveyor 3 interacts with a robot, which is not shown in more detail, which picks up the bucket handles one by one.

In order to avoid this problem, according to the invention an ejector 11 is fitted which movably extends essentially perpendicularly to the direction of movement of sliding plate 9. The ejector is able to move through an opening 12 in boundary wall 22. With this arrangement the movement of ejector 11 is synchronised with the movement of sliding plate 9 in such a way that sliding plate 9 stops in a position just below opening 12 during the upward stroke thereof, ejector 11 is moved to the left and throws bucket handles at a level higher than the thickness of one bucket handle back to lower sliding plates, ejector 11 moves back and sliding plate 9 then continues its path so that the only bucket handle lying thereon is dispensed onto conveyor belt 3.

Ejector 11 is controlled with the aid of ram 25 and control 26. Control 26 is coupled in a manner that is not shown in more detail with the other control for the installation. It is, of course, possible to synchronise movement of ejector 11 with that of the sliding plates in some other way. It is important that in any event the return movement of the ejector 11 is executed actively, that is to say by operation of ram 25 or other mechanical means.

The movement of the ejector is shown in more detail in Fig. 4, from which it can also be seen that the support surface of sliding plate 9 has two peaks 13 which are located exactly opposite ejectors 11. By this means it is ensured that despite the fact that, for example, bucket handle 16 is not absolutely straight, precisely the accurate thickness thereof is always obtained at the location of the elevations 13, that is to say bucket handle 16 will always bear on the two elevations 13.

It can also be seen from Fig. 4 that ejectors 11 are so constructed that the bucket handle 15 lying thereon is pushed away by the ejectors.

It can also be seen from Fig. 4 that as a result of the presence of the elevation it is not important in what position the knobs 17 for snapping the bucket handles into the bucket concerned are located. After all, the depth of said knobs 17 is less than the depth of the trough beyond elevation 13.

Operation of the ejector 11 can be coupled in any manner known from the prior art with the movement of sliding plate 9. Means for positioning the bucket handles in the widthwise direction, that is to say perpendicularly to the plane of the drawing, can also engage on the conveyor belt. These means can be, for example, further pins, which are driven by the same mechanism as the other pins, which mechanism is also able to make the sliding plates reciprocate, that is to say all movements are fully linked. An example of such means is shown in the figures. Vertical fingers 24 are present which are connected to the outlet via slot 23. The ends of the fingers 24 protrude above the free end of slide 9. This means that if the bucket handle lying on the free end of slide 9 drops through opening 18, placing on the belt is prevented by the presence of the fingers 24. The handles are able to land on conveyor belt 3 only after the fingers 24 have been moved further downwards. In the intervening period the fingers 24 exert an aligning effect on the handles.

Although the invention has been described above with reference to a preferred embodiment, it must be understood that numerous modifications can be made thereto without going beyond the scope of the present application.

For instance, it is possible to make a number of sliding plates smaller or larger and to change the shape of the ejectors and the set height with respect to the support surface of sliding plate 9. It is possible to interrupt the movement of sliding plate 9 in order to make the outward movement of the ejector 11 possible, but it is also possible to operate ejector 11 during the movement of sliding plate 9, in which case ejector 11 must, of course, move at a very much higher speed than sliding plate 9.

It has been found that using the installation described above it is easily possible individually to separate out more than two thousand handles per hour and to place these in the correct position on the discharge conveyor 3.

Modifications such as referred to above are considered to fall within the scope of the present invention and more particularly within the scope of the appended claims.

## Claims

1. Installation (1) for separating out individual articles (10, 15, 16), comprising a series of support members for said articles, which support members (5-9) adjoin one another and reciprocate with respect to one another, wherein the support surface of each of said support members executes a movement having a vertical component, such that the support surface of the first support member moves into a relatively low feed position and the support surface of the last support member moves into a relatively high discharge position, characterised in that ejector means (11) are fitted which are movable in the path of the support surface of one of said support members in a direction for removing one or more articles from said support surface and wherein said ejector means are fitted such that they cooperate with said last support member.

2. Installation according to Claim 1, wherein the ejector means comprise operating means (25) controlled by a control (26) in such a way that the ejector means (11) move in the path of the articles if said last support member (9) is a predetermined distance away from said ejector means.

3. Installation according to Claim 2, wherein said distance is at least the thickness dimension of said article (10, 15, 16).

4. Installation according to one of the preceding claims, wherein said ejector means are located below said discharge position.

5. Installation according to one of the preceding claims, wherein said ejector means are arranged to move perpendicularly to said support member.

6. Installation according to one of the preceding claims, wherein the support surface interacting with the ejector means (11) is provided with elevations (13) close to said ejector means.

7. Method for separating out individual articles, comprising supply of said articles, receiving by reciprocating with a vertical component, one or more of said articles from said supply on the support face of the support member, followed by discharging on the support face of a further adjacent and higher reciprocating support member, followed by discharging on a discharge conveyor, wherein during discharging on said discharge conveyor, articles being above a predetermined height above said support face, are removed from said support face, characterised in that, that removal is realised with electric/mechanical/hydraulic controlled ejector means.
